# EUROPEAN PATENT SPECIFICATION

(11) **EP 3 919 788 B1**
(45) Date of publication and mention of the grant of the patent: **08.03.2023**
(21) Application number: 20708157.1
(22) Date of filing: 27.01.2020
(51) Int. Cl.: F16K 5/04, F16K 5/12

(54) **MECHANICAL FLUID VALVE**
MECHANISCHES VENTIL FÜR FLUIDE
VANNE MÉCANIQUE POUR DES FLUIDES

(30) Priority: 28.01.2019 ES 201930064
(43) Date of publication of application: 08.12.2021
(73) Proprietor: González Llana, Enrique, 39310 Miengo (ES)
(72) Inventor: González Llana, Enrique, 39310 Miengo (ES)
(74) Representative: García Gómez, José Donato
(86) International application number: PCT/ES2020/070053
(87) International publication number: WO 2020/157352

(56) References cited:
- CN-A- 101 706 005
- CN-A- 108 591 510
- GB-A- 2 164 126
- US-A- 3 558 100

## Description

### Technical Field

This invention is applicable in the field relating to the manufacture of valves for opening, closing and regulating fluid flows and, more specifically, of mechanical regulating valves for the supply of liquid or gaseous fluids.

### Background Art

Different valves for regulating fluid flows are currently known.

Specifically, in the international application WO 2011/009793, a valve composed of several plates with drilled holes of different sizes, for passing a gaseous fluid there through, producing the regulation of the gas outlet is disclosed.

The drawback of this valve is that it has a high mechanical complexity.

The patent ES 2 552 586 A1 discloses a gas regulating valve for a hob provided with a valve body housed in the valve housing, with the capacity of rotating in a predetermined direction from a closed position to an open position and wherein the valve body may continue to rotate in the predetermined rotating direction beyond the open position to a low-flame position, and wherein the flow of gas passing through the valve is adjustable with continuous progression, rotating the valve body from the open position to the low-flame position.

In this type of valve, fluid regulation is done virtually intuitively by rotating the valve body, but it does not have predetermined open positions in which the valve supplies predetermined flows of fluid.

The document US 5 009 393 discloses a linear turn down metering valve for gaseous fuels comprising a valve body provided with a frustoconical valve chamber receiving a rotatable valve plug and including a radial inlet and an axial outlet at one end opposite a control shaft. In this case, the passage of gas through the valve is determined by elongated holes that allow linearly increasing the gas flow as the control shaft is rotated.

As in the prior art, this valve does not have determined open positions in which the supply of predetermined fluid flows is made.

The mechanical regulating valves on the market have the disadvantage of not allowing complete regulation of the valve with the rotation of a spindle that moves an internal regulator which controls the fluid flow supplied. This is because the piece positioned on the spindle is frustoconical.

### Summary of the invention

The mechanical valve for fluids, object of this invention, is of the type disclosed in the preamble of claim 1, and has constructive particularities intended for supplying predetermined fluid flows at also predetermined valve opening positions, thus allowing a controlled flow supply by choosing the determined position, rather than the linear opening and without a specific flow control allowed by the current valves.

The valve of the invention also has features intended to allow the direct passage of the INLETOTvalve from a closed position to a maximum opening position, or a minimum opening position, without passing through any intermediate opening position.

Another objective of the invention is to simplify its construction by avoiding the use of frustoconical cavities and plugs.

Another objective of the invention is to allow the supply of predetermined flows selectable by the valve opening positions, making it a valve especially suitable for different uses, such as: general industrial uses, flow regulation in laboratory precision apparatuses, precise regulation in low pressure micro regulation, water taps, pneumatic or hydraulic equipment, large fluid distribution lines, regulation of the supply of industrial gas to burners, regulation of gas cylinders for use in welding or medicinal products, or other consumer equipment.

Therefore, one of the outstanding advantages of this valve is that it allows precise and repetitive regulation in each of the opening positions, by means of a purely mechanical solution, which does not require an electronic control for said precise and repetitive flow regulation.

The mechanical valve for fluids, object of this invention, comprises a valve body provided with a fluid inlet port, a fluid outlet port and a cylindrical inner passageway for communication of said inlet and outlet ports, and a stem provided with an end housed in the inner passageway of the valve with the capacity of rotation between: an opening position, in which a fluid passageway between the inlet and outlet ports is allowed, and a closed position, in which the fluid passage is prevented.

To achieve the aforementioned objective, the stem comprises a hollow tubular segment tightly housed with the capacity of rotation in the inner passageway of the valve body.

Said tubular segment comprises: an inner cavity for circulating fluid in an opening position of the valve and maintained in permanent communication with the fluid inlet port of the valve body; radial fluid outlet ports of different sections, circumferentially distributed in the tubular segment and arranged in correspondence with different opening positions of the stem, forming an alignment of radial ports of increasing section, suitable for facing the outlet port of the valve body in successive angular positions of the stem, and providing different fluid flows, and a closing portion, facing the fluid outlet port in a determined angular position of the stem, closing the fluid passage.

By rotating the stem and positioning it in different opening positions, the respective radial fluid outlet ports are placed facing the outlet port of the valve body and, consequently, the passage of the fluid flow determined by the pressure of the corresponding port is achieved.

The cylindrical configuration of both the inner passageway of the valve body and the hollow tubular segment of the stem greatly simplifies the manufacture of the valve and its cost.

Another relevant feature of the invention is that the closing portion of the tubular segment of the stem is arranged between the two radial ports, of greater and lesser section of the tubular segment of the stem, said stem being capable of rotation in two opposite directions, such that said stem can move directly from the closed position of the valve to a valve maximum, opening or minimum opening position, by a limited angular displacement and without needing to pass through any of the other intermediate opening positions.

According to the invention, the inner cavity of the stem comprises, for keeping it in permanent communication with the fluid inlet port of the valve body, radial windows located in circular arrangement in the hollow tubular segment of the stem and spaced in the axial direction of the alignment of radial fluid outlet ports.

These radial windows are sized so that, regardless of the rotational position of the stem, they keep the valve fluid inlet in permanent communication with the inner cavity of the stem's cylindrical body.

It is worth mentioning that the rotation of the stem, to arrange it in any of the opening positions or in the closed position, can be done manually or motorised.

The document CN201810639726A discloses a two-way angle valve which comprises a valve body and a valve element arranged in the valve body; the valve body comprises a water inlet channel and a water outlet channel which communicate with each other, and the water inlet channel is perpendicular to the water outlet channel. According to the two-way angle valve, the valve element has high flow capacity and is convenient to use, the degree of abrasion to the valve element can be reduced, the service life of the valve is prolonged, and the two-way angle valve is convenient to machine, manufacture and use.

The document GB2164126A discloses a gas cock comprising a single piece body in which there is machined at least one inlet and at least one outlet, and an internal body that is capable of revolving within an internal cavity in the body, the body is provided with a central axial passage and several perimetral passages connected thereto.

The document US3558100A discloses a rotary control valve having a control member provided with a plurality of circumferentially spaced, fixed area orifices having their axes disposed at an angle to the axis of rotation for selective registry with a flowway through the valve disposed at the same angle to the axis of rotation, whereby to provide straight-line flow through the valve at all orifice settings.

The document CN101706005A discloses a rotary multi-level flux regulating valve. A shell of the valve is provided with a cylindrical or spherical cavity; the shell of the valve is provided with two passages that can lead the cavity to be communicated with the outside nonlinearly; and the two passages are respectively called an inflow cavity and an outflow cavity of the shell of the valve.

### Brief description of the contents of the drawings

In order to complement the description that is being carried out and with the purpose of facilitating the understanding of the characteristics of the invention, the present description is accompanied by a set of drawings wherein, by way of a non-limiting example, the following has been represented:
- Figure 1 shows a schematic elevational view of an exemplary embodiment of the mechanical fluid valve according to the invention, sectioned by a vertical plane and with the stem in a closed position.
- Figure 2 shows a view analogous to the previous one with the stem in one of the opening positions.
- Figure 3 corresponds to a section of the valve of the preceding figures by the plane A-A marked in Figure 1.
- Figure 4 shows a diagram of the different flows provided by the valve in the different opening positions, represented by the references of the corresponding ports.

### Detailed explanation of embodiments of the invention

In the exemplary embodiment shown in the accompanying figures, the valve comprises a body (1) provided with an inlet port (11), an outlet port (12) and an inner passageway (13) of cylindrical configuration for communication of the inlet ports (11) and outlet ports (12).

The valve comprises a stem (2) having a tubular segment (21) housed in the inner passageway (13) of the body (1), with the capacity of rotation in two opposite directions and without the capacity of displacement in an axial direction, the opposite end (22) of the stem protruding from the body (1) for its rotational actuation and its arrangement in a closed position or in various valve opening positions.

The inlet port (11) and outlet port (12) of the body (1) are axially spaced from the inner passageway (13) of the body (1) and, in this embodiment, diametrically opposed.

The tubular segment (21) of the stem (2) has an inner cavity for fluid circulation when the valve is in an opening position.

The tubular segment (21) of the stem (2) comprises radial windows (24) that permanently communicate the inner cavity (23) of the stem (2) with the inlet port (11) of the valve body (1).

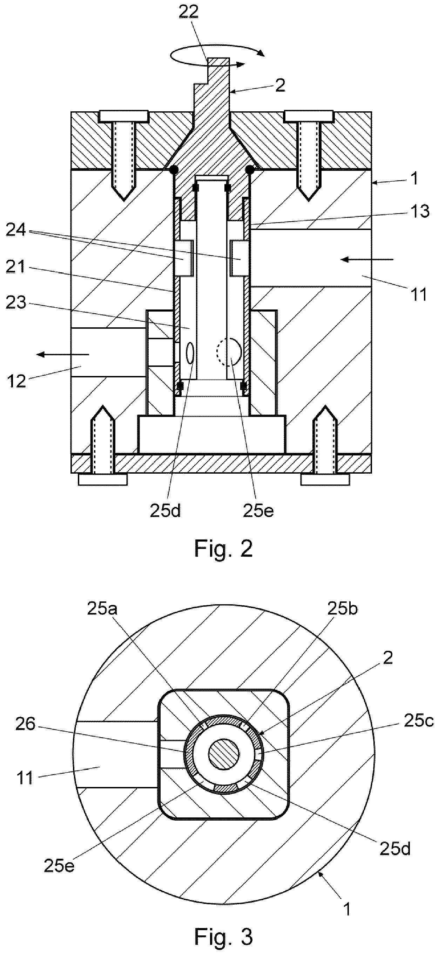

The tubular segment (21) of the stem also has radial ports (25a, 25b, 25c, 25d, 25e) of different sections circumferentially distributed in the tubular segment (21) of the stem and arranged by section, as shown in Figure 3.

Said radial ports (25a - 25e) form an alignment and are angularly spaced apart defining successive opening positions in which they individually face the fluid outlet port (12) of the valve body (1).

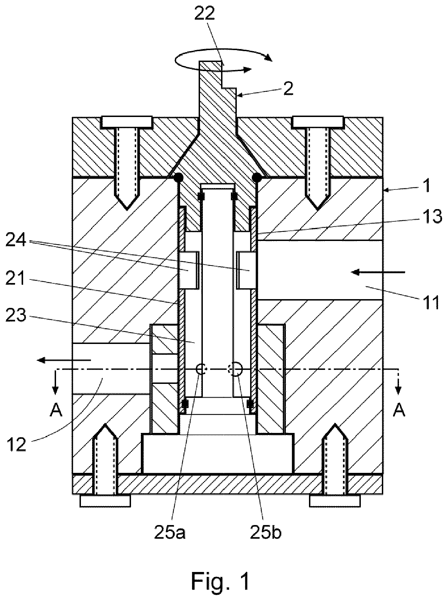

The tubular segment (21) of the stem has, between the ports (25a - 25e) of greater and lesser section, a continuous closing portion, which in a determined angular position of the stem (2), specifically that represented in Figures 1 and 3, faces the fluid outlet port with the valve closing the fluid passage.

As mentioned above, starting from the closed position shown in Figure 3, it is sufficient to rotate the stem (2) in one direction or another so that the valve moves from a maximum opening position, when facing the radial port (25e) of greater section with the outlet port (12) of the valve body, or to a minimum open position, when facing the radial port (25a) of lesser section with the outlet port (12a) of the valve body (1).

As can be seen in Figures 1 and 2, the inlet port (11) of the valve body (1) and the radial windows (24) of the tubular segment (21) of the stem (2) are located in a plane longitudinally spaced from the plane defined by the radial outlet ports (25a-25e) of the stem (2) and the outlet port (12) of the valve body (1).

As can be seen in Figure 4, in the different valve opening positions, obtained by facing the successive radial ports (25a, 25b, 25c, 25d and 25e) with the outlet port (12) of the body (1), the valve provides a predetermined fluid flow for each of said ports (25a - 25e).

## Claims

1. A mechanical valve for fluids, comprising:
- a valve body (1) provided with an inlet port (11), an outlet port (12) and an inner passageway (13) for communicating said inlet and outlet ports (11, 12); and
- a stem (2) provided with an end housed in the inner passageway of the valve body with the capacity of rotation between: an opening position, in which fluid passes between the inlet and outlet ports (11, 12) of the body (1), and a closed position, in which said fluid passage is prevented;
wherein
- the inner passageway (13) of the valve body (1) is cylindrical and
- the stem (2) comprises a cylindrical tubular segment (21), tightly housed, with the capacity of rotation and without the capacity of axial displacement in the inner passageway (13) of the valve body (1), and an opposite end (22) protruding from the body (1) for rotational actuation; said tubular segment (21) comprising:
- an inner cavity (23) for fluid circulation in an opening position of the valve,
- radial windows (24),
- radial fluid outlet ports (25a - 25e), of different sections, circumferentially distributed in the tubular segment (21) and arranged in correspondence with different opening positions of the stem (2), forming an alignment of radial ports (25a- 25e) of increasing section, suitable for facing the outlet port (12) of the valve body (1) in successive angular positions of the stem (2) and providing different fluid flows and
- a closing portion (26), facing the outlet port (12) of the body (1) in a determined angular position of the stem (2), closing the fluid passage, **characterised in that** said radial windows (24) permanently communicate the inner cavity (23) of the stem with the inlet port (11) of the valve body (1).

2. The valve, according to claim 1, **characterised in that** the closing portion (26) of the tubular segment (21) of the stem is arranged between the two radial ports (25e, 25a) of greater and lesser section of the tubular segment (21).

3. The valve, according to claim 1, **characterised in that** said stem (2) has the capacity to rotate in two opposite directions, and moves directly from a closing position to a position of maximum opening or minimum opening by a limited angular displacement of the stem (2) in either direction, respectively.

## Patentansprüche

1. Mechanisches Ventil für Fluide, umfassend:
- einen Ventilkörper (1), der mit einer Einlassöffnung (11), einer Auslassöffnung (12) und einem inneren Durchgang (13) zum Verbinden der Einlass- und Auslassöffnung (11, 12) bereitgestellt ist; und
- eine Spindel (2), die mit einem Ende bereitgestellt ist, das in dem inneren Durchgang des Ventilkörpers aufgenommen und in der Lage ist, sich zwischen einer Öffnungsposition, in welcher Fluid zwischen der Einlass- und Auslassöffnung (11, 12) des Körpers (1) strömt, und einer Schließposition, in welcher das Strömen des Fluids verhindert wird, zu drehen;
wobei
- der innere Durchgang (13) des Ventilkörpers (1) zylindrisch ist und
- die Spindel (2) ein zylindrisches, rohrförmiges Segment (21), das genau passend untergebracht ist, und das zwar in der Lage ist, sich zu drehen, aber nicht, sich in dem inneren Durchgang (13) des Ventilkörpers (1) axial zu verschieben, und ein gegenüberliegendes Ende (22), das zur Drehbetätigung aus dem Körper (1) herausragt, umfasst; wobei das rohrförmige Segment (21) Folgendes umfasst:
- einen inneren Hohlraum (23) für eine Fluidzirkulation in einer Öffnungsposition des Ventils,
- radiale Fenster (24),
- radiale Fluidauslassöffnungen (25a bis 25e) mit unterschiedlichen Querschnitten, die umlaufend in dem rohrförmigen Segment (21) verteilt und entsprechend verschiedenen Öffnungspositionen der Spindel (2) angeordnet sind und dabei eine Ausrichtung von radialen Öffnungen (25a bis 25e) mit zunehmenden Querschnitten bilden, die geeignet sind, der Auslassöffnung (12) des Ventilkörpers (1) in aufeinanderfolgenden Winkelpositionen der Spindel (2) zugewandt zu sein und unterschiedliche Fluidströme bereitzustellen, und
- einen Schließabschnitt (26), welcher der Auslassöffnung (12) des Körpers (1) in einer bestimmten Winkelposition der Spindel (2) zugewandt ist und dabei den Fluiddurchlass verschließt, **dadurch gekennzeichnet, dass** die radialen Fenster (24) den inneren Hohlraum (23) der Spindel dauerhaft mit der Einlassöffnung (11) des Ventilkörpers (1) verbinden.

2. Ventil nach Anspruch 1, **dadurch gekennzeichnet, dass** der Schließabschnitt (26) des rohrförmigen Segments (21) der Spindel zwischen den beiden radialen Öffnungen (25e, 25a) des rohrförmigen Segments (21), die einen größeren und einen kleineren Querschnitt aufweisen, angeordnet ist.

3. Das Ventil nach Anspruch 1, **dadurch gekennzeichnet, dass** die Spindel (2) in der Lage ist, sich in zwei entgegengesetzte Richtungen zu drehen und sich direkt von einer Schließposition zu einer Position maximaler Öffnung oder minimaler Öffnung durch eine begrenzte Winkelverschiebung der Spindel (2) in beide Richtungen bewegt.

## Revendications

1. Vanne mécanique pour des fluides, comprenant :
- un corps de vanne (1) pourvu d'un orifice d'entrée (11), un orifice de sortie (12) et un passage intérieur (13) pour faire communiquer lesdits orifices d'entrée et de sortie (11, 12) ; et
- une tige (2) pourvue d'une extrémité logée dans le passage interne du corps de vanne avec la capacité de rotation entre : une position d'ouverture, dans laquelle le fluide passe entre les orifices d'entrée et de sortie (11, 12) du corps (1), et une position fermée, dans laquelle ledit passage de fluide est empêché ;
dans laquelle
- le passage interne (13) du corps de vanne (1) est cylindrique et
- la tige (2) comprend un segment tubulaire cylindrique (21), logé de manière étanche, avec la capacité de rotation et sans la capacité de déplacement axial dans le passage interne (13) du corps de vanne (1), et une extrémité opposée (22) faisant saillie du corps (1) pour un actionnement en rotation ; ledit segment tubulaire (21) comprenant :
- une cavité interne (23) pour la circulation de fluide dans une position d'ouverture de la vanne,
- des fenêtres radiales (24),
- des orifices de sortie de fluide radiaux (25a-25e), de différentes sections, répartis circonférentiellement dans le segment tubulaire (21) et agencés en correspondance avec différentes positions d'ouverture de la tige (2), formant un alignement d'orifices radiaux (25a- 25e) de section croissante, appropriés pour être disposés en face de l'orifice de sortie (12) du corps de vanne (1), dans des positions angulaires successives de la tige (2) et fournissant différents écoulements de fluide et
- une partie de fermeture (26), située en face de l'orifice de sortie (12) du corps (1) dans une position angulaire déterminée de la tige (2), fermant le passage du fluide, **caractérisée en ce que** lesdites fenêtres radiales (24) font communiquer en permanence la cavité interne (23) de la tige avec l'orifice d'entrée (11) du corps de vanne (1).

2. Vanne selon la revendication 1, **caractérisée en ce que** la partie de fermeture (26) du segment tubulaire (21) de la tige est disposée entre les deux orifices radiaux (25e, 25a) ayant une section tubulaire (21) plus ou moins grande.

3. Vanne selon la revendication 1, **caractérisée en ce que** ladite tige (2) a la capacité de tourner dans deux directions opposées, et passe directement d'une position de fermeture à une position d'ouverture maximale ou d'ouverture minimale par un déplacement angulaire limité de la tige (2), dans l'une ou l'autre direction, respectivement.
